# EUROPEAN PATENT SPECIFICATION

(11) **EP 2 599 996 B1**
(45) Date of publication and mention of the grant of the patent: **29.06.2016**
(21) Application number: 11382376.9
(22) Date of filing: 02.12.2011
(51) Int. Cl.: F03D 7/04, F03D 7/02

(54) **Controlling of noise emission of a wind park**
Steuerung der Geräuschemission eines Windparks
Contrôle de l'émission de bruit d'un parc éolien

(43) Date of publication of application: 05.06.2013
(73) Proprietor: Vestas Wind Systems A/S, 8200 Aarhus N (DK)
(72) Inventor: Matesanz Gil, Alvaro, E-28760 Tres Cantos - Madrid (ES)
(74) Representative: Vestas Patents Department

(56) References cited:
- EP-A2- 1 748 184
- WO-A1-2006/090215
- WO-A2-2010/037387
- US-A1- 2010 143 117
- US-B1- 6 688 841

## Description

### FIELD OF THE INVENTION

The invention relates to controlling the noise emission of a wind park, and to wind park configured to control its noise emission.

### BACKGROUND OF THE INVENTION

Due to noise regulations that are or will be enforceable in some regions of the world, wind parks have to be able to operate under a controlled level of noise. The noise emitted from a wind park, i.e. from the wind turbines of which a plurality are comprised in the wind park, has two main contributions: noise produced by the machine part of the wind turbines (e.g. the gear box and the generator), and aerodynamic sound due to the air flow across the rotor blades. The controlled noise level which has to be respected may depend on one or more parameters, for example, the definition of the point of measurement for such noise (also referred to as the "immission point"), the time of day or night and/or the background noise. As noise control for a wind park will usually affect the wind park's yield considerable interest is directed to noise control.
US patent US 6,688,841 B1 describes a method for operating a wind park according to which the rotary speed of wind turbines closest to an immission point is decreased if the noise level at the immission point is above a threshold.

EP 2 216 549 A2 describes a wind turbine providing noise control. A controller adjusts an operating parameter of the wind turbine in response to a noise control signal which indicating whether noise is above a predetermined level. The wind turbine then operates in a noise control mode.

EP 1748184 describes a method for control of wind turbine noise in which noise is monitored by near field microphones, optionally with park boundary or sensitive area microphones. A transfer function is established for noise emission to a defined position, to allow selection of turbines to be controlled in a reduced noise mode.

### SUMMARY OF THE INVENTION

A method of controlling noise emission of a wind park comprising a plurality of wind turbines and at least one wind-park controller, comprises monitoring noise emitted from the wind park to at least one measuring location, by detecting and identifying noise emitted from some of the wind turbines at least in one direction from the measuring point falling in a common angular sector seen from the measuring point, and estimating the level thereof. The relative influence of at least some of the wind turbines on the noise emitted from the wind park to the measuring location is established, and, in response to the level of the monitored noise emitted from the wind park to the measuring location exceeding a predetermined noise threshold, is commanded, by the wind-park controller, one or more of the wind turbines, chosen by the importance of its or their relative influence on the noise emitted from the wind park to the measuring location, to change operation to an operation mode with reduced noise emission. According to another aspect, a wind park is provided comprising a plurality of wind turbines and at least one controller for wind park operation control and at least one measuring unit for monitoring noise emitted from the wind park and connected to the controller , wherein noise emitted from the wind park is monitored at at least one measuring location by at least one measuring unit which is configured for detecting and identifying noise emitted from some of the wind turbines at least in one direction from the measuring location falling in a common angular sector seen from the measuring location. The controller is programmed for estimating the level of the detected and identified noise emitted from the wind park to the measuring location, establishing the relative influence of at least some of the wind turbines on the noise emitted from the wind park to the measuring location, and, in response to the level of the monitored noise emitted from the wind park to the measuring location exceeding a predetermined noise threshold, commanding one or more of the wind turbines, chosen by the importance of its or their relative influence on the noise emitted from the wind park to the measuring location, to change operation to an operation mode with reduced noise emission. Other features are inherent in the disclosed products and methods or will become apparent to those skilled in the art from the following detailed description of embodiments.

### BRIEF DESCRIPTION OF THE DRAWINGS

Embodiments of the invention will now be described, by way of example, and with reference to the accompanying drawing, in which:
Fig. 1 illustrates an embodiment with a single noise measuring unit in the periphery of a wind park;
Fig. 2 illustrates an embodiment with a plurality of noise measuring units in the periphery of a wind park;
Fig. 3 illustrates an embodiment with a plurality of noise measuring units inside and in the periphery of a wind park;
Fig. 4 illustrates an embodiment with a plurality of noise measuring units inside a wind park;
Fig. 5 illustrates noise reduction according to an embodiment.

The drawings and the description of the drawings are of embodiments of the invention and not of the invention itself.

### DESCRIPTION OF EMBODIMENTS

Noise emitted from a wind park to at least one measuring point is monitored by detecting and identifying noise emitted from some of the wind turbines at least in one direction from the measuring point falling in a common angular sector seen from the measuring point, and estimating the level thereof.

Based on this, the relative influence of at least some of the wind turbines on the noise emitted from the wind park to the measuring location is established. If the level of the monitored noise emitted from the wind park to the measuring location exceeds a predetermined noise threshold the wind-park controller commands one or more of the wind turbines, chosen by the importance of its or their relative influence on the noise emitted from the wind park to the measuring location, to change operation to an operation mode with reduced noise emission. For example, the wind turbine or turbines which contribute more than others to the total noise emitted are commanded to reduce their noise emission first.

In some embodiments in which noise emitted from a plurality of wind turbines in a jointly monitored sector all the wind turbines of this sector can be commanded to reduce their noise emission jointly. In other embodiments the wind turbine, or turbines, of this sector which is (are) mainly responsible for the noise emitted is (are) identified and selectively commanded to reduce its (their) noise emission individually, e.g. based on a trial-and-error method. This is described below.

In some embodiments, the noise emitted from the wind park is monitored at one measuring unit. In alternative embodiments, it is measured at a plurality of measuring units distributed over the wind park and/or its periphery.

In some embodiments, at least one measuring unit is positioned near or at an immission point outside the wind park where the level of noise emitted from the wind park should not exceed the predetermined noise threshold. For example, measuring units may be positioned in a periphery of the wind park and/or inside the wind park.

There are different ways of how the monitoring of the noise can be performed, for example by microphones, by acoustic intensimetry, by at least one acoustic camera, and/or by beam forming.

Wind turbines normally operate at nominal rotation speed. For example, in the partial-load regime (at wind speeds below nominal wind speed) they operate at a rotation speed at which the wind turbine's efficiency is at its maximum; this maximum-efficiency rotation speed is normally nearly proportional to the wind speed. In the nominal-load regime (at wind speeds at or above nominal wind speed) they normally operate at a constant rotation speed, which, for example, may correspond to the maximum-efficiency rotation speed at the transition between partial load and full load. In some embodiments, changing operation to an operation mode with reduced noise emission comprises reducing the rotation speed below the nominal rotation speed. Alternatively, in severe cases in which such a speed reduction is not sufficient, a wind turbine with a significant noise contribution can also be shut down.

In some embodiments, the wind turbines are configured to operate in a limited number of discrete noise modes, the different noise modes having different levels of noise emission, and changing operation to an operation mode with reduced noise emission comprises switching to a noise mode with lower noise emission than that of the current noise mode. Such a discrete noise mode may be defined by a given rotor rotation speed or by a given combination of blade pitch angle and generator torque or by discrete setting of other parameters on which the wind turbine's noise production depends.

In some embodiments, vibrations on the ground are measured in addition to the monitoring of acoustic noise. Vibrations of the ground generated by the wind turbines may be additionally considered as an immission of which a given threshold should not be exceeded.

In some embodiments, commanding the individual wind turbines to reduce noise emission includes optimizing the operation of the wind park with respect to power production. This means that the operation of the individual wind turbines is commanded such that the measured noise level at a given place, e.g. a considered immission point near a housing estate or the like, is not exceeded and, on the other hand, the power output of the wind park is maximized.

According to another embodiment monitoring noise emitted from the wind park to at least one measuring location comprises in an repeated iterative way the activities of detecting and identifying noise emitted from some of the wind turbines at least in one direction from a given measuring location, and estimating the level thereof, and further establishing the relative influence of at least some of the wind turbines on the noise emitted from the wind park to the measuring location, and, in response to the level of the monitored noise emitted from the wind park to the measuring location exceeding a predetermined noise threshold, commanding, by the wind-park controller, one or more of the wind turbines, chosen by the importance of its or their relative influence on the noise emitted from the wind park to the measuring location, to change operation to an operation mode with reduced noise emission, and again detecting and identifying noise emitted from some of the wind turbines at in one direction from a given measuring location, and estimating the level thereof.

In some of the embodiments in which a plurality of wind turbines are monitored jointly in one common direction from the measuring point, in the course of the iterations of the method, different wind turbines of the wind turbines monitored in one common direction from the measuring point are selectively commanded to change operation to an operation mode with reduced noise emission. For example, assume that the noise of n wind turbines (n = 1, 2, 3, ..) which are arranged in one common angular sector seen from the measuring point is monitored jointly. Then, for example, in a first iteration one of these joint-sector wind turbines, the noise production of which is considered significant is commanded to change operation to an operation mode with reduced noise emission. This could be the wind turbine out of the joint-sector wind turbines at issue which is closest to the measuring point. In the next iteration, the monitoring is repeated. If the resulting noise reduction is not sufficient another wind turbine the joint-sector wind turbines at issue (in addition or alternative to the previous one) is commanded to change operation to an operation mode with reduced noise emission, etc.

The idea behind this is as follows: Assume that several wind turbines can only be monitored jointly because they cannot be discriminated directionally (e.g. several wind turbines arranged in one line which also includes the measuring point). According to a trial-and-error method the wind turbine is first noise-reduced which is expected to produce the most significant contribution to the noise produced by these wind turbines. If this is not sufficient, the method is repeated iteratively, by now noise-reducing the wind turbine (in addition or alternatively) which is expected to produce the second-most significant contribution to the noise produced by these wind turbines, etc.

For example, in such an embodiment, noise emitted from the wind park is monitored at at least one measuring location by at least one measuring unit which is configured for detecting and identifying noise emitted from some of the wind turbines at least in one direction from the measuring location falling in a common angular sector seen from the measuring location. The controller may be programmed for performing in an repeated iterative way the activities of estimating the level of the detected and identified noise emitted from the wind park to the measuring location, establishing the relative influence of at least some of the wind turbines on the noise emitted from the wind park to the measuring location, and, in response to the level of the monitored noise emitted from the wind park to the measuring location exceeding a predetermined noise threshold, commanding one or more of the wind turbines, chosen by the importance of its or their relative influence on the noise emitted from the wind park to the measuring location, to change operation to an operation mode with reduced noise emission, and again estimating the level of the detected and identified noise emitted from the wind park to the measuring location.

In some embodiments the noise received by at least one measuring unit is analysed to detect real-time machine status of the wind turbines or to detect impacts on the wind turbine blades.

In general, the noise reduction in the respective wind turbine may be done by any measures which are adapted to decrease the machine part noise and/or the aerodynamic noise. The aerodynamic noise produced increases with the blade tip speed. Since a considerable amount of the noise produced is aerodynamic noise, reducing the tip speed of the wind turbine blades, i.e. the rotation speed of the rotor, is a suitable measure to reduce noise emission. The rotation speed can, for example, be reduced by changing the blade pitch angle of one or more rotor blades out of the aerodynamic optimum (e.g. towards a more feathered pitch angle) and/or by increasing the generator torque. Other operation parameters of the wind turbine may also be appropriate to reduce the noise emitted from the wind turbine. Finally, a complete stop of wind turbine operation, with the rotor turned out of the wind, is also possible to reduce noise production of a wind park.
In some embodiments the wind-park controller and/or controllers of the individual wind turbines are computers, e.g. microcontrollers, with memory able to store computer code. The method carried out by the wind-park controller and/or wind-turbine controllers and described herein may be provided in the form of a computer program. The computer program is stored in the computer's memory in a non-transitory manner, and can be executed by the computer representing the wind-park controller and/or the wind turbine controllers. The method described is performed when the program is executed on the computer(s) representing the wind-park controller and/or the wind turbine controllers unit.

The expression "...controller programmed to [*plus method-related activities*]" in the product claims means that the computer(s) representing the wind-park controller and/or the wind turbine controllers is (are) programmed such that the program causes the claimed method-related activities to be carried out when the computer program is executed. The wind park defined in this manner is at least distinguished by this special programming (i.e. storage of this special computer program) from other wind parks in which, however, the controller(s) is (are) not programmed to carry out said method-related activities.

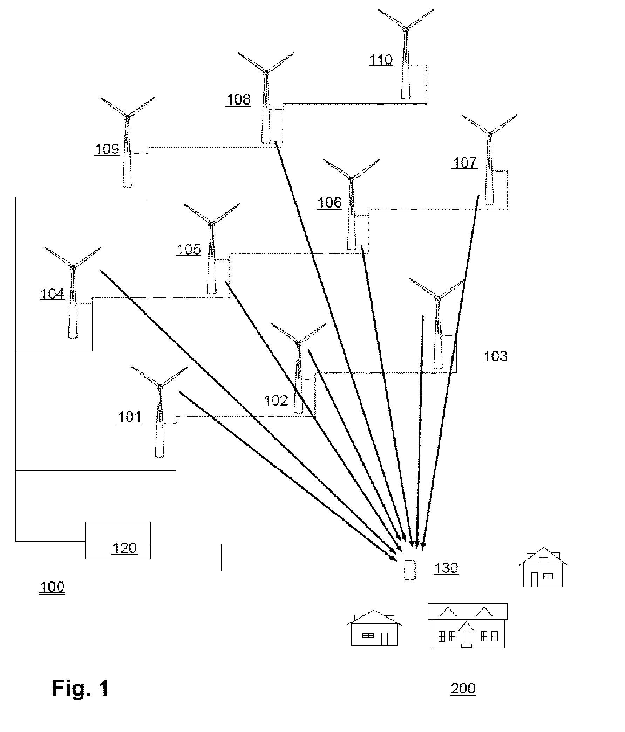

Figs. 1 through 4, respectively, show in a schematic view examples of a wind park 100 of which the operation is controlled in order to reduce noise emitted from the wind park 100 to one or more immission points, e.g. housing estates 200, or the like.

The wind park 100 as illustrated includes a plurality of wind turbines 101 ... 110 which are located at different places within the wind park 100 and with reference to the housing estate 200.

The wind turbines 101 ... 110 of the wind park 100 are connected to a wind-park controller 120 which is programmed to control wind park operation. The wind park controller 120 is connected to the wind turbines 101 ... 110 by an appropriate bus system of which the one shown in the figures is of exemplary nature only.

As shown in the figures, the wind park controller 120 further is connected to at least one measuring unit 130; 131, 132, 133; 141 ... 146.

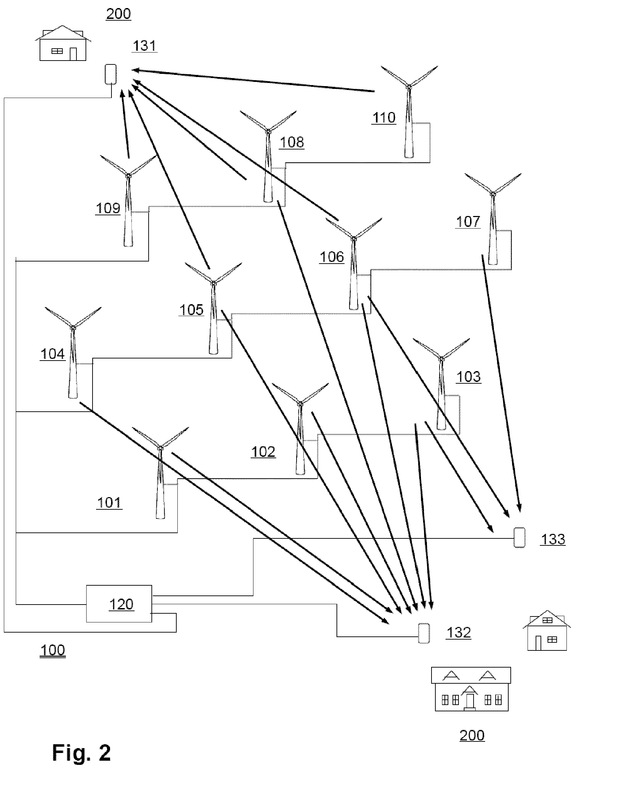

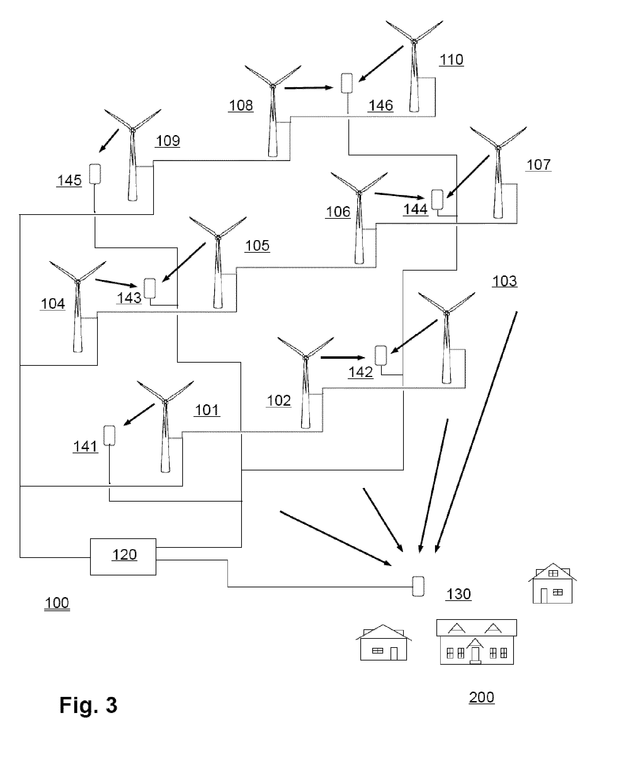

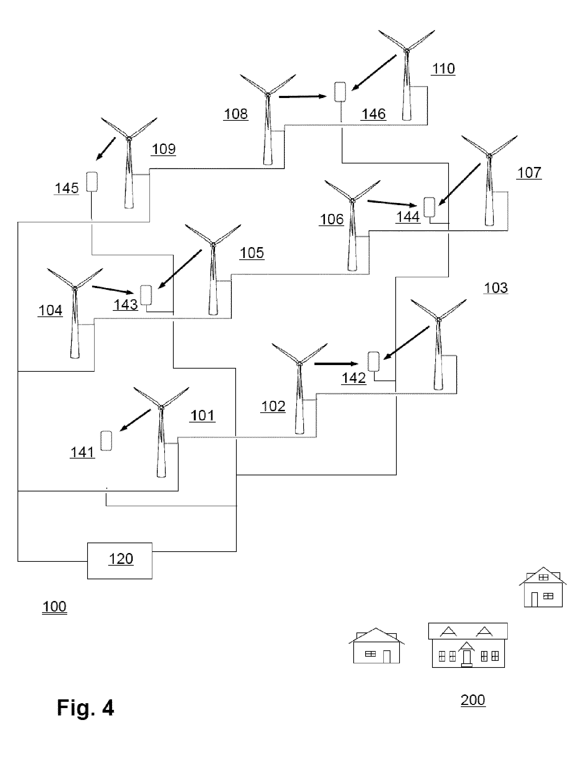

The measuring unit 130 in Fig. 1 or the measuring units 131, 132, 133 in Fig. 2 or the measuring units 130 and 141 ... 146 in Fig. 3 or the measuring units 141 through 146 in Fig. 4, are configured to detect and identify the noise as emitted individually by each one of at least a number of the plurality of the wind turbines, i.e. the wind turbines 101 ... 108 or all the wind turbines 101 ... 110, respectively, in the shown embodiments, which are located in an area of influence of a respective measuring unit. The noise emitted from the wind park 100, i.e. from the wind turbines 101 ... 108, or 101 ... 110, of the same, is monitored by the at least one measuring unit 130; 131, 132, 133; 141 ... 146.

Additionally , some or all of the measuring units, e.g. the units 131, 132 and 133 in Fig. 2, may be configured to detect and identify noise emitted from some of the wind turbines 101 ... 110 at least in one direction from the respective measuring location. For example, while the measuring unit 131 is able to detect noise from the wind turbines 105, 109, and 110 individually, it detects noise emitted jointly from the wind turbines 106 and 108 in one direction from the measuring location of the measuring unit 131. In a similar way, the measuring unit 132 detects noise from the wind turbines 103, 106 and 108 individually, but detects noise emitted from the wind turbines 101 and 104 jointly in one direction from the measuring location of the measuring unit 132, and also detects noise emitted from the wind turbines 102 and 105 jointly in another direction from the measuring location of the measuring unit 132. The measuring unit 133 detects noise emitted from the wind turbine 107 individually, but detects noise emitted from the wind turbines 103 and 106 jointly in one direction from the measuring location of the measuring unit 133.The relative influence of the wind turbines on the noise emitted from the wind park to the respective measuring location is estimated, and, by the wind-park controller 120, one or more of the wind turbines, chosen by the importance of its or their relative influence on the noise emitted from the wind park to the measuring location, are commanded to change operation to an operation mode with reduced noise emission.

The wind park controller 120 is programmed to control the operation of the wind park 100 to reduce the emitted noise when the noise level as measured by the measuring unit or units 130; 131, 132, 133; 141 ... 146 exceeds a predetermined (given) noise threshold value. This is carried out by the wind-park controller 120 by estimating the level of the emitted noise and individually controlling one or more of the wind turbines 101 ... 108 in the shown embodiments, namely those which are significantly contributing to the measured noise which is exceeding the given threshold, e.g. those which are mostly contributing to the measured noise.

The controller 120 may be programmed to perform the activities repeatedly and iteratively of estimating the level of the detected and identified noise emitted from the wind park to the measuring location, establishing the relative influence of at least some of the wind turbines on the noise emitted from the wind park to the measuring location, and in response to the level of the monitored noise emitted from the wind park to the measuring location exceeding a predetermined noise threshold, commanding one or more of the wind turbines, chosen by the importance of its or their relative influence on the noise emitted from the wind park to the measuring location, to change operation to an operation mode with reduced noise emission, and again estimating the level of the detected and identified noise emitted from the wind park to the measuring location.
In some of the embodiments with joint measurement of a plurality of wind turbines in a common angular sector performing the method iteratively and repeatedly enables one or more individual wind turbines of the plurality of wind turbines in the sector to be identified and commanded to change operation to an operation mode with reduced noise emission i.e. "noise-reduced"). For example, in a first iteration one of these joint-sector wind turbines, the noise production of which is considered significant is commanded to change operation to an operation mode with reduced noise emission. This could be the wind turbine out of the joint-sector wind turbines at issue which is closest to the measuring point. In the next iteration, the monitoring is repeated. If the resulting noise reduction is not sufficient another wind turbine the joint-sector wind turbines at issue (in addition or alternative to the previous one) is commanded to change operation to an operation mode with reduced noise emission, etc.

The wind park control which is executed by the wind-park controller 120 may be carried out in a way optimizing the operation of the wind park with respect to the power production. For example, the wind-park controller 120 is programmed to control the wind park such that power production is a maximum when the noise emitted, as measured as one or more relevant immission points is not exceeding the given threshold. For example, the speed of wind turbines operating at nominal load can be reduced without reducing power production, by increasing the torque produced (by adjusting the pitch to a better aerodynamic efficiency) such the power is kept at nominal power. However, the speed of a wind turbine operating at partial load (i.e. below nominal load) cannot normally be reduced without a loss of power, because reducing the speed normally implies reducing the efficiency away from the optimum efficiency. Hence, in some embodiments reducing noise emission while optimizing the wind-parks overall power production means, for example, primarily reducing the speed of those noise emitting wind turbines which operate at full load, while avoiding speed reduction of (or assigning only less speed reduction to) those wind turbines which operate at partial load.

The wind park controller 120 is shown in the figures as exemplified by one single unit but may also be embodied as a distributed controller by separate units.

Now, referring again to the figures, Fig. 1 shows a wind park 100 which includes a plurality of wind turbines 101 ... 110 and at least one controller 120 for wind park operation control. One measuring unit 130 is positioned near an immission point outside the wind park 100, namely near a housing estate 200 or the like where the level of noise emitted from the wind park 100 should not exceed a given noise threshold value.

The controller 120 is programmed for estimating the noise level as emitted individually by each one of at least a number of the plurality of the wind turbines 101 ... 110, here the wind turbines 101 ... 108 which, in the shown embodiment, are considered to be located in an area of influence of the measuring unit 130.

The controller 120 further is programmed for controlling the operation of the wind park 100 to reduce the emitted noise when a noise level as detected by the measuring unit 130 exceeds a given noise threshold value. This is carried out by individually controlling or commanding one or more wind turbines which significantly contribute to the threshold exceeding measured noise. As already stated above, significantly contributing to the threshold exceeding measured noise may be understood, in one embodiment, controlling the wind turbine or the wind turbines which mostly contribute to the threshold exceeding measured noise.

The measuring unit 130 is, as stated above, adapted for detecting and identifying noise as emitted individually by each one of a number of wind turbines 101 through 108 located in an area of influence of the measuring unit 130. For performing such selective monitoring, the measuring unit 130 may include directionally selective microphones, an acoustic intensimetry device, at least one acoustic camera or an acoustic beam forming device, or by another appropriate device. Acoustic intensimetry or acoustic beam forming are known methods using sensor arrays for directional signal reception which is achieved by combining elements in the array such that signals at a given angle experience constructive interference and while others experience destructive interference in order to achieve spatial selectivity. Also acoustic cameras make use of spatial selectivity of sensor arrays.

Beamforming is a signal processing technique used in sensor arrays for directional signal reception. This is achieved by combining elements in the array in a way where signals at particular angles experience constructive interference and while others experience destructive interference.

In the embodiment shown in Fig. 2, the wind park 100 again includes a plurality of wind turbines 101 through 110 and at least one controller 120 for wind park operation control. Different from the embodiment of Fig. 1, in the embodiment of Fig. 2 there are provided a number of measuring units, i.e. measuring units 131, 132, 133 which are positioned in a periphery of the wind park 100. The measuring units 131, 132, 133 also are positioned at considered immission points which are outside the wind park and which are situated at places where the level of noise emitted from the wind park should not exceed a given noise threshold value, namely near a housing estate 200 or the like.

The controller 120 again is programmed for monitoring the noise emitted from the wind park, i.e. from the wind turbines 101 ... 108 which are located in an area of influence of the measuring units 131, 132, 133. The noise emitted from the wind turbines 101 ... 108 is detected and identified individually by the measuring units 131, 132, 133 and the noise level of the same is estimated individually by the controller 120. In detail, the noise emitted from the wind turbines 108, 109, 110 is detected and identified by the measuring unit 131, the noise emitted from the wind turbines 101, 102, 103, 104, 105, 106, 108 is detected and identified by the measuring unit 132, and the noise emitted from the wind turbines 103, 106, 107 is detected and identified by the measuring unit 133.

The controller 120 again is programmed for controlling the operation of the wind park 100 to reduce the emitted noise when a noise level measured by the measuring units 131, 132, 133 exceeds a given noise threshold value by individually controlling those of the wind turbines 101 through 110 which significantly contribute to the threshold exceeding measured noise.

In the embodiments shown in Fig. 3 and 4, a wind park 100 again includes a plurality of wind turbines 101 ... 110 and at least one controller 120 for wind park operation control. A number of measuring units 141 ... 146 is positioned, at different places, within the wind park 100. The measuring units 141 ... 146 are positioned such that the measuring unit 141 detects and identifies noise emitted from the wind turbine 101, the measuring unit 142 is positioned to detect and identify noise emitted from the wind turbines 102, 103, the measuring unit 143 is positioned to detect and identify noise emitted from the wind turbines 104, 105, the measuring unit 144 is positioned to detect and identify noise emitted from the wind turbines 106, 107, the measuring unit 145 is positioned to detect and identify noise emitted from the wind turbine 109, and the measuring unit 146 is positioned to detect and identify noise emitted from the wind turbines 108, 110.

In the embodiment of Fig. 3 further is provided a measuring unit 130 which is positioned near an immission point outside the wind park 100 where the level of noise emitted from the wind park 100 should not exceed a given noise threshold value, as near a housing estate 200 or the like, similar as in the embodiment of Fig. 1.

The measuring unit 130 is programmed for monitoring the noise emitted from the wind park 100 at the place near the housing estate 200 where the level of noise should not exceed a given noise threshold value. The measuring units 141 ... 146 are adapted for detecting and identifying noise and noise level as emitted individually by each one of the wind turbines under consideration, in the embodiments of Fig. 3 and Fig. 4 all of the plurality of wind turbines 101 ... 110 of the wind park 100, which, however, also could be
only a number, i.e. a part of the plurality of the wind turbines, e.g. the wind turbines 101 ... 108 as in the embodiments of Figs. 1 and 2.

The controller 120 again is programmed for controlling the operation of the wind park 100 to reduce the emitted noise when a noise level measured by the measuring unit 130 exceeds a given noise threshold value. This control is done by individually controlling or commanding one or more of the wind turbines 101 ... 110, or 101 ... 108, which significantly contribute to the threshold exceeding measured noise.

In the embodiment of Fig. 4 the measuring units 141 through 146 are positioned within the wind park in a similar way as in Fig. 3, whereas no measuring unit corresponding to the measuring unit 130 of Fig. 3 is provided outside the wind park.

The noise is detected and identified and the noise level is estimated as emitted individually by each one of the wind turbines 101 through 110 (it could be only the wind turbines 101 through 108 as in the embodiments of Figs. 1 and 2, i.e. only a part of the plurality of wind turbines) which are located in an area of influence of a respective measuring unit.

For a considered immission point outside the wind park where the level of noise emitted from the wind park should not exceed a given noise threshold value, as near a housing estate 200 or the like, the same is estimated or calculated on the basis of the noise and noise level which is detected and identified by the measuring units 141 ... 146 individually for each of the wind turbines 101 ... 110 or for only a part of them as the wind turbines 101 ... 108 as in the embodiments of the Figs. 1 and 2.

The measuring units 141 ... 146 within the wind park could be microphones, directionally selective microphones, acoustic intensimetry devices, one or more acoustic camera or beam forming devices, or by another appropriate device, similar as the measuring units 130; 131, 132, 133 in the embodiments of the Figs. 1 and 2.

The measuring unit 130 in the embodiment of Fig. 3 may be embodied by directionally selective microphones, by an acoustic intensimetry device, by means of least one acoustic camera or by a beam forming device or by another appropriate device. In this case also the measuring unit 130 performs directional selectivity, i.e. is adapted for detecting and identifying noise and as emitted individually by at least a number of wind turbines of interest. Consequently, the measurements of the measuring units 141 through 146 within the wind park 100 may be combined with the measurements of the measuring unit 130 outside the wind park 100 at a position where the level noise emitted from the wind park 100 should not exceed a given noise threshold value.

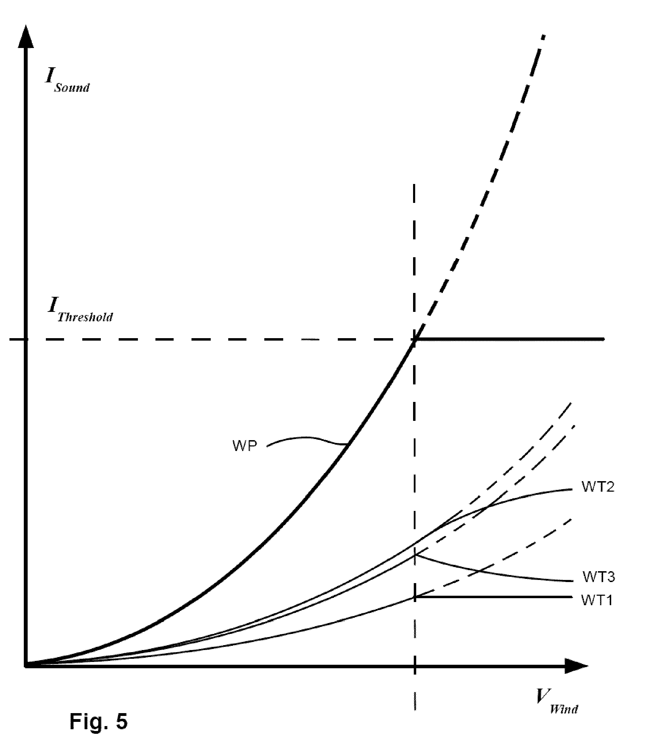

Fig. 5 shows an example of reduction of noise where the number of considered wind turbines is three. The diagram illustrates a noise or sound intensity ***I_{Sound}*** in dependence from a wind speed ***V_{Wind}*.** The noise emitted from the wind park is indicated by a curve WP; the contributions of three wind turbines which are considered in this example are indicated by respective curves WT1, WT2, WT3. A threshold which should not be exceeded by the noise emitted from the wind park is indicated by ***I_{Threshold}*.** The noise production without noise reduction is shown by dashed lines in the diagram.

As shown in the diagram, when the curve WP of the noise emitted from the wind park WP intersects the threshold ***I_{Threshold}***, the wind turbines WT1, WT2, WT3 are individually commanded in such a way that the noise emitted from the wind park WP is limited to the threshold value ***I_{Threshold}***, as shown by the solid lines.

This limitation to the threshold value ***I_{Threshold}*** can be done in different ways. As shown for the wind turbine WT1, the same is commanded that the emitted noise is constant, independent from the further increasing wind speed ***V_{Wind}***. As shown for the wind turbine WT2, this is commanded in a way that the emitted noise is still increasing with increasing wind speed ***V_{Wind}***, but reduced and less than unaffected. On the other hand, for wind turbine WT3 an example is shown that commanding is such that the emitted noise is decreasing with increasing wind speed. The sum of the contributions of the three wind turbines WT1, WT2, WT3 is as shown by the solid curve, i.e. limited to the threshold value ***I_{Threshold}***, which is constant for increasing wind speed ***V_{Wind}*.**

Controlling the wind park 100 by the controller 120 may be performed in a way optimizing the operation of the wind park 100 with respect to power production, i.e. maximizing the output power wherein the emitted noise is limited.

The wind park control may depend on one or more externally given parameters, as for example, the definition of the point of measurement of the noise, the day time, i.e. night time different from day time, and/or the background noise, as to the noise regulations that are to be respected.

The wind park control further may be performed by switching between a limited number of discrete noise modes in the wind turbines. A limited number of defined noise modes in the wind turbines may simplify and improve the control algorithms as carried out by the controller 120. Such a discrete noise mode may be defined by a given rotor rotation frequency or by a given combination of blade pitch angle and generator torque or by discrete setting of other parameters on which the wind turbine's noise production is dependent.

Additionally to the noise emitted from the wind park, also vibrations on the ground may be measured and controlled in a similar way as described above, i.e. extending the term "noise" also to vibrations on the ground.

Additionally, the noise as detected and monitored by at least one measuring unit may be analyzed to detect real-time machine status of the wind turbines or to detect impacts on the wind turbine blades. That means the measurements from the measuring units also may be used for machine status or failure diagnosis for the wind turbines.

## Claims

1. A method of controlling noise emission of a wind park comprising a plurality of wind turbines (101 ... 110) and at least one wind-park controller (120), the method comprising
- monitoring noise emitted from the wind park to at least one measuring point, by
- detecting and identifying noise emitted from some of the wind turbines (101 ... 108) at least in one direction from the measuring point falling in a common angular sector seen from the measuring point, and estimating the level thereof,
- establishing a relative influence of at least some of the wind turbines on the noise emitted from the wind park to the measuring location,
- in response to the level of the monitored noise emitted from the wind park to the measuring location exceeding a predetermined noise threshold, commanding, by the wind-park controller (120), one or more of the wind turbines, chosen by the importance of its or their relative influence on the noise emitted from the wind park to the measuring location, to change operation to an operation mode with reduced noise emission.

2. The method of claim 1, wherein the noise emitted from the wind park is monitored at one measuring unit (130) or at a plurality of distributed measuring units (131, 132, 133; 141 ... 146).

3. The method of claim 2, wherein at least one measuring unit (130) is positioned near or at an immission point outside the wind park where the level of noise emitted from the wind park should not exceed the predetermined noise threshold.

4. The method of claim 2 or 3, wherein at least one measuring unit (131, 132, 133) is positioned in a periphery of the wind park.

5. The method of any one of claims 2 to 4, wherein at least one measuring unit (141 ... 146) is positioned in the wind park.

6. The method of any one of the preceding claims, wherein monitoring the noise in one direction is performed by at least one of directionally selective microphones, by acoustic intensimetry, at least one acoustic camera, and beam forming.

7. The method of any one of the preceding claims, wherein the wind turbines operate at rotation speeds, and changing operation to an operation mode with reduced noise emission comprises reducing the rotation speed.

8. The method of any one of the preceding claims, wherein the wind turbines are configured to operate in a limited number of discrete noise modes, the different noise modes having different levels of noise emission, and changing operation to an operation mode with reduced noise emission comprises switching to a noise mode with lower noise emission than that of the current noise mode.

9. The method of any one of the preceding claims, comprising measuring vibrations on the ground.

10. The method of any one of the preceding claims, wherein commanding the individual wind turbines to reduce noise emission includes optimizing the operation of the wind park with respect to power production.

11. The method of any one of the preceding claims, wherein the activities of detecting and identifying noise, estimating the level thereof, establishing relative influence, commanding one or more of the wind turbines to change operation in response to exceeding a noise threshold, are carried out in repeatedly and iteratively, wherein different wind turbines of the wind turbines monitored in one common direction from the measuring point are selectively commanded to change operation to an operation mode with reduced noise emission.

12. The method of any one of the preceding claims, comprising analyzing the noise received by at least one measuring unit to detect real-time machine status of the wind turbines or to detect impacts on the wind turbine blades.

13. A wind park comprising a plurality of wind turbines (101 ... 110) and at least one wind park controller (120) and at least one measuring unit (130; 131, 132, 133; 141 ... 146) for monitoring noise emitted from the wind park and connected to the controller (120), wherein noise emitted from the wind park is monitored at at least one measuring location by at least one measuring unit (130; 131, 132, 133; 141 ... 146) which is configured for
- detecting and identifying noise emitted from some of the wind turbines (101 ... 108) at least in one direction from the measuring location falling in a common angular sector seen from the measuring location, and wherein the controller (120) is programmed for:
- estimating the level of the detected and identified noise emitted from the wind park to the measuring location,
- establishing the relative influence of at least some of the wind turbines (101 ... 110) on the noise emitted from the wind park to the measuring location, and
- in response to the level of the monitored noise emitted from the wind park to the measuring location exceeding a predetermined noise threshold, commanding one or more of the wind turbines, chosen by the importance of its or their relative influence on the noise emitted from the wind park to the measuring location, to change operation to an operation mode with reduced noise emission.

14. The wind park of claim 13, wherein the wind-park controller is programmed to command one ore more individual wind turbine to reduce their noise emission by reducing their rotation speed.

15. The wind park of claim 13 or 14, wherein the at least one measuring unit (130; 131, 132, 133; 141 ... 146) is configured and the at least one wind park controller (120) is programmed to carry out the activities of detecting and identifying noise, estimating the level thereof, establishing relative influence, commanding one or more of the wind turbines to change operation in response to exceeding a noise threshold, are carried out in repeatedly and iteratively, wherein different wind turbines of the wind turbines monitored in one common direction from the measuring point are selectively commanded to change operation to an operation mode with reduced noise emission.

## Patentansprüche

1. Verfahren zum Steuern von Geräuschemission eines Windparks umfassend eine Mehrzahl von Windturbinen (101 ... 110) und zumindest eine Windpark-Steuereinheit (120), das Verfahren umfassend
- Überwachen der von dem Windpark zu zumindest einem Messpunkt emittierten Geräusche, mittels
- Feststellen und Identifizieren der von einigen der Windturbinen (101 ... 108) emittierten Geräusche zumindest in einer Richtung von dem Messpunkt, die in einen gemeinsamen Winkelsektor von dem Messpunkt aus gesehen fällt, und Abschätzen des Niveaus dieser,
- Festlegen eines relativen Einflusses von zumindest einigen der Windturbinen auf die von dem Windpark zu der Messstelle emittierten Geräusche,
- als Reaktion auf das Niveau der überwachten Geräusche, die von dem Windpark zu der Messstelle emittiert werden, das eine vorbestimmte Rauschschwelle überschreitet, Anweisen, mittels der Windpark-Steuereinheit (120), einer oder mehrerer Windturbinen, die entsprechend der Bedeutung ihres relativen Einflusses auf die von dem Windpark zu der Messstelle emittierten Geräusche ausgewählt wurden, den Betrieb zu einem Betriebsmodus mit reduzierter Geräuschemission zu ändern.

2. Verfahren nach Anspruch 1, wobei die von dem Windpark emittierten Geräusche von einer Messeinheit (130) überwacht werden oder von einer Mehrzahl von verteilten Messeinheiten (131, 132, 133; 141 ... 146).

3. Verfahren nach Anspruch 2, wobei zumindest eine Messeinheit (130) in der Nähe oder an einem Immissionspunkt außerhalb des Windparks angeordnet ist, wo das Niveau der von dem Windpark emittierten Geräusche die vorbestimmte Rauschschwelle nicht überschreitet.

4. Verfahren nach einem der Ansprüche 2 oder 3, wobei zumindest eine Messeinheit (131, 132, 133) an einer Peripherie des Windparks angeordnet ist.

5. Verfahren nach einem der Ansprüche 2 bis 4, wobei zumindest eine Messeinheit (141 ... 146) in dem Windpark angeordnet ist.

6. Verfahren nach einem der vorhergehenden Ansprüche, wobei Überwachen der Geräusche in einer Richtung von zumindest einem ausgewählt von richtungsselektiven Mikrofonen, akustischer Intensimetrie, zumindest einer akustischen Kamera und Strahlformung ausgeführt wird.

7. Verfahren nach einem der vorhergehenden Ansprüche, wobei die Windturbinen bei Rotationsgeschwindigkeiten betrieben werden und Ändern des Betriebs zu einem Betriebsmodus mit reduzierter Geräuschemission Reduzieren der Rotationsgeschwindigkeit umfasst.

8. Verfahren nach einem der vorhergehenden Ansprüche, wobei die Windturbinen ausgeführt sind, in einer begrenzten Anzahl von diskreten Rauschmodi betrieben zu werden, wobei die verschiedenen Rauschmodi verschiedene Niveaus von Geräuschemission aufweisen, und wobei Ändern des Betriebs zu einem Betriebsmodus mit reduzierter Geräuschemission Wechseln zu einem Rauschmodus mit geringerer Geräuschemission als die des aktuellen Rauschmodus umfasst.

9. Verfahren nach einem der vorhergehenden Ansprüche, umfassend Messen von Vibrationen auf dem Erdboden.

10. Verfahren nach einem der vorhergehenden Ansprüche, wobei Anweisen der individuellen Windturbinen zum Reduzieren der Geräuschemission Optimieren des Betriebs des Windparks hinsichtlich der Energieerzeugung umfasst.

11. Verfahren nach einem der vorhergehenden Ansprüche, wobei die Aktivitäten Feststellen und Identifizieren von Geräuschen, Abschätzen des Niveaus dieser, Festlegen eines relativen Einflusses, Anweisen einer oder mehrerer Windturbinen, als Reaktion auf Überschreiten einer Rauschschwelle, den Betrieb zu ändern, wiederholt und schrittweise ausgeführt werden, wobei verschiedene Windturbinen der in einer gemeinsamen Richtung von dem Messpunkt überwachten Windturbinen selektiv angewiesen werden, den Betrieb zu einem Betriebsmodus mit reduzierter Geräuschemission zu ändern.

12. Verfahren nach einem der vorhergehenden Ansprüche, umfassend Analysieren des von zumindest einer Messeinheit empfangenen Rauschens, um einen Echtzeit-Maschinenstatus der Windturbinen festzustellen oder um Einflüsse auf die Windturbinenblätter festzustellen.

13. Windpark umfassend eine Mehrzahl von Windturbinen (101 ... 110) und zumindest eine Windpark-Steuereinheit (120) und zumindest eine Messeinheit (130; 131, 132, 133; 141 ... 146) zum Überwachen der von dem Windpark emittierten Geräusche und verbunden mit einer Steuereinheit (120), wobei die von dem Windpark emittierten Geräusche an zumindest einer Messstelle von zumindest einer Messeinheit (130; 131, 132, 133; 141 ... 146) überwacht werden, die ausgeführt ist zum
- Feststellen und Identifizieren der von einigen der Windturbinen (101 ... 108) emittierten Geräusche zumindest in einer Richtung von der Messstelle, die in einen gemeinsamen Winkelsektor, von der Messstelle aus gesehen, fällt, und wobei die Steuereinheit (120) programmiert ist zum:
- Abschätzen des Niveaus der festgestellten und identifizierten von dem Windpark zu der Messstelle emittierten Geräusche,
- Festlegen eines relativen Einflusses von zumindest einigen der Windturbinen (101 ... 110) auf die von dem Windpark zu der Messstelle emittierten Geräusche, und
- als Reaktion auf das Niveau der überwachten Geräusche, die von dem Windpark zu der Messstelle emittiert werden, das eine vorbestimmte Rauschschwelle überschreitet, Anweisen einer oder mehrerer Windturbinen, die entsprechend der Bedeutung ihres relativen Einflusses auf die von dem Windpark zu der Messstelle emittierten Geräusche ausgewählt wurden, den Betrieb zu einem Betriebsmodus mit reduzierter Geräuschemission zu ändern.

14. Windpark nach Anspruch 13, wobei die Windpark-Steuereinheit programmiert ist zum Anweisen einer oder mehrerer individueller Windturbinen ihre Geräuschemission durch Reduzieren ihrer Rotationsgeschwindigkeit zu reduzieren.

15. Windpark nach Anspruch 13 oder 14, wobei die zumindest eine Messeinheit (130; 131, 132, 133; 141 ... 146) ausgeführt ist und die zumindest eine Windpark-Steuereinheit (120) programmiert ist zum wiederholten und schrittweisen Ausführen der Aktivitäten Feststellen und Identifizieren von Geräuschen, Abschätzen des Niveaus dieser, Festlegen eines relativen Einflusses, Anweisen einer oder mehrerer Windturbinen, als Reaktion auf Überschreiten einer Rauschschwelle, den Betrieb zu ändern, wobei verschiedene Windturbinen der in einer gemeinsamen Richtung von dem Messpunkt überwachten Windturbinen selektiv angewiesen werden, den Betrieb zu einem Betriebsmodus mit reduzierter Geräuschemission zu ändern.

## Revendications

1. Procédé de commande de l'émission de bruit d'un parc éolien comprenant une pluralité d'éoliennes (101 ... 110) et au moins une unité de commande de parc éolien (120), le procédé comprenant
- la surveillance du bruit émis à partir du parc éolien au niveau d'au moins un point de mesure, en
- détectant et identifiant le bruit émis à partir de certaines des éoliennes (101 ... 108) dans au moins une direction à partir du point de mesure tombant dans un secteur angulaire commun vu à partir du point de mesure, et
en évaluant son niveau,
- l'établissement d'une influence relative d'au moins certaines des éoliennes sur le bruit émis à partir du parc éolien jusqu'à l'emplacement de mesure,
- en réponse au niveau du bruit surveillé émis à partir du parc éolien jusqu'à l'emplacement de mesure dépassant un seuil de bruit prédéterminé, la commande, par l'unité de commande de parc éolien (120), d'une ou plusieurs des éoliennes, choisies par l'importance de son ou de leur influence relative sur le bruit émis à partir du parc éolien jusqu'à l'emplacement de mesure, pour changer le fonctionnement à un mode de fonctionnement avec une émission de bruit réduite.

2. Procédé selon la revendication 1, dans lequel le bruit émis à partir du parc éolien est surveillé au niveau d'une unité de mesure (130) ou au niveau d'une pluralité d'unités de mesure réparties (131, 132, 133 ; 141 ... 146).

3. Procédé selon la revendication 2, dans lequel l'unité de mesure (130) est positionnée près ou au niveau d'un point d'immission à l'extérieur du parc éolien où le niveau de bruit émis à partir du parc éolien ne devrait pas dépasser le seuil de bruit prédéterminé.

4. Procédé selon la revendication 2 ou 3, dans lequel au moins une unité de mesure (131, 132, 133) est positionnée dans une périphérie du parc éolien.

5. Procédé selon l'une quelconque des revendications 2 à 4, dans lequel l'unité de mesure (141 ... 146) est positionnée dans le parc éolien.

6. Procédé selon l'une quelconque des revendications précédentes, dans lequel la surveillance du bruit dans une direction particulière est effectuée par au moins un de microphones directionnellement sélectifs, par une mesure d'intensité acoustique, au moins un appareil de prise de vues acoustiques et une formation de faisceau.

7. Procédé selon l'une quelconque des revendications précédentes, dans lequel les éoliennes fonctionnent à certaines vitesses de rotation et le changement du fonctionnement à un mode de fonctionnement avec une émission de bruit réduite comprend la réduction de la vitesse de rotation.

8. Procédé selon l'une quelconque des revendications précédentes, dans lequel les éoliennes sont configurées pour fonctionner dans un nombre limité de modes de bruit discrets, les différents modes de bruit ayant des niveaux d'émission de bruit différents, et le changement de fonctionnement à un mode de fonctionnement avec une émission de bruit réduite comprend la commutation à un mode de bruit avec une émission de bruit inférieure à celle du mode de bruit courant.

9. Procédé selon l'une quelconque des revendications précédentes, comprenant la mesure de vibrations sur le sol.

10. Procédé selon l'une quelconque des revendications précédentes, dans lequel la commande des éoliennes individuelles pour réduire l'émission de bruit inclut l'optimisation du fonctionnement du parc éolien en ce qui concerne la production d'énergie.

11. Procédé selon l'une quelconque des revendications précédentes, dans lequel les activités de détection et d'identification du bruit, d'évaluation de son niveau, d'établissement de l'influence relative, de commande d'une ou de plusieurs des éoliennes pour changer le fonctionnement en réponse à un dépassement d'un seuil de bruit, sont effectuées à plusieurs reprises et de manière itérative, dans lequel des éoliennes différentes des éoliennes surveillées dans une direction commune à partir du point de mesure sont commandées de manière sélective pour changer le fonctionnement à un mode de fonctionnement avec une émission de bruit réduite.

12. Procédé selon l'une quelconque des revendications précédentes, comprenant l'analyse du bruit reçu par au moins une unité de mesure pour détecter un état de machine en temps réel des éoliennes ou pour détecter des impacts sur les pales d'éolienne.

13. Parc éolien comprenant une pluralité d'éoliennes (101 ... 110) et au moins une unité de commande de parc éolien (120) et au moins une unité de mesure (130; 131, 132, 133 ; 141 ... 146) pour surveiller le bruit émis à partir du parc éolien et reliées à l'unité de commande (120), dans lequel le bruit émis à partir du parc éolien est surveillé au niveau d'au moins un emplacement de mesure par au moins une unité de mesure (130 ; 131, 132, 133 ; 141 ... 146) qui est configurée pour
- détecter et identifier le bruit émis à partir de certaines des éoliennes (101 ... 108) au moins dans une direction à partir de l'emplacement de mesure tombant dans un secteur angulaire commun vu à partir l'emplacement de mesure,
et dans lequel l'unité de commande (120) est programmée pour:
- évaluer le niveau du bruit détecté et identifié émis à partir du parc éolien jusqu'à l'emplacement de mesure,
- établir l'influence relative d'au moins certaines des éoliennes (101 ... 110) sur le bruit émis à partir du parc éolien jusqu'à l'emplacement de mesure, et
- en réponse au niveau du bruit surveillé émis à partir du parc éolien jusqu'à l'emplacement de mesure dépassant un seuil de bruit prédéterminé, commander une ou plusieurs des éoliennes, choisies par l'importance de sa ou de leur influence relative sur le bruit émis du parc éolien jusqu'à l'emplacement de mesure, pour changer le fonctionnement à un mode de fonctionnement avec une émission de bruit réduite.

14. Parc éolien selon la revendication 13, dans lequel l'unité de commande de parc éolien est programmée pour commander une ou plusieurs éoliennes individuelles pour réduire leur émission de bruit en réduisant leur vitesse de rotation.

15. Parc éolien selon la revendication 13 ou 14, dans lequel l'au moins une unité de mesure (130 ; 131, 132, 133 ; 141 ... 146) est configurée et l'au moins une unité de commande de parc éolien (120) est programmée pour effectuer les activités de détection et d'identification de bruit, d'évaluation de son niveau, d'établissement de l'influence relative, de commande d'une ou de plusieurs des éoliennes pour changer le fonctionnement en réponse à un dépassement d'un seuil de bruit, qui sont effectuées à plusieurs reprises et de manière itérative, dans lequel des éoliennes différentes des éoliennes surveillées dans une direction commune à partir du point de mesure sont commandées de manière sélective pour changer le fonctionnement à un mode de fonctionnement avec une émission de bruit réduite.
